# EUROPÄISCHE PATENTSCHRIFT

(11) **EP 2 580 093 B1**
(45) Veröffentlichungstag und Bekanntmachung des Hinweises auf die Patenterteilung: **06.04.2016**
(21) Anmeldenummer: 11733991.1
(22) Anmeldetag: 09.06.2011
(51) Int. Cl.: B60Q 3/00, B60Q 3/02, B60R 13/02

(54) **AUSSTATTUNGSTEIL FÜR DEN INNENRAUM EINES FAHRZEUG MIT EINER LEUCHTFLÄCHE**
EQUIPMENT PART FOR A VEHICLE INTERIOR WITH AN ILLUMINATING SURFACE
PIÈCE D'ÉQUIPEMENT INTÉRIEUR POUR VÉHICULE AVEC UNE SURFACE LUMINEUSE

(30) Priorität: 09.06.2010 DE 102010023247
(43) Veröffentlichungstag der Anmeldung: 17.04.2013
(73) Patentinhaber: Johnson Controls GmbH, 51399 Burscheid (DE)
(72) Erfinder: MUELLER, Wolfgang, 42929 Wermelskirchen (DE); PILGER, Frank, 51467 Bergisch Gladbach (DE)
(74) Vertreter: Trinks, Ole
(86) Internationale Anmeldenummer: PCT/EP2011/002824
(87) Internationale Veröffentlichungsnummer: WO 2011/154136

(56) Entgegenhaltungen:
- WO-A1-2005/028251
- DE-A1- 10 341 253
- DE-A1- 19 844 316
- DE-A1-102006 047 887
- FR-A1- 2 920 717
- JP-A- 59 011 934
- JP-A- 2004 090 897

## Beschreibung

Die vorliegende Erfindung betrifft ein Ausstattungsteil für den Innenraum eines Fahrzeuges mit einer Leuchtfläche, die aus einem Formkörper, an dem ein Lichtleiter angeordnet ist, der mit einer Deckschicht versehen ist, besteht.

### Stand der Technik

Derartige Ausstattungsteile sind beispielsweise aus der DE 103 41 253 A1 bekannt. Ausstattungsteile gemäß dem Stand der Technik haben oftmals den Nachteil, dass sie nicht formstabil sind, dass die Lichtquelle nicht geschützt ist und/oder dass sie scharfkantige Randbereiche aufweist.

JP 59011934 A und JP 2004090897 A offenbaren jeweils ein Ausstattungsteil mit einem Lichtleiter welcher zwischen einem Basisteil bzw. einer Gehäusewand und einer Deckschicht angeordnet ist, wobei die Deckschicht eine Dekor- und eine Polsterschicht aufweist. Das Licht einer Lichtquelle wird im Randbereich des Ausstattungsteils in den Lichtleiter eingekoppelt.

### Aufgabe

Es war deshalb die Aufgabe der vorliegenden Erfindung ein Ausstattungsteil zur Verfügung zu stellen, das die Nachteile des Standes der Technik nicht aufweist.

### Lösung

Gelöst wird die Aufgabe mit einem Ausstattungsteil nach Anspruch 1.

Die vorliegende Erfindung betrifft ein Ausstattungsteil für den Innenraum eines Fahrzeugs mit einer Leuchtquelle, die aus einem Formkörper, an dem ein Lichtleiter angeordnet ist, der mit einer Deckschicht versehen ist, besteht. Der Formkörper ist in seinem Randbereich zumindest abschnittsweise mit einer Einbuchtung versehen, die eine Lichtquelle aufnimmt.

Die vorliegende Erfindung betrifft ein Ausstattungsteil für den Innenraum eines Fahrzeuges. Bei einem derartigen Ausstattungsteil handelt es sich in der Regel um ein Verkleidungsteil oder um das Armaturenbrett. Beispielsweise ist das Ausstattungsteil eine Türverkleidung oder der Dachhimmel. In der Regel weisen diese Ausstattungsteile ein Trägermaterial auf, das zumindest mit einer Dekorschicht, oftmals jedoch auch mit einer Polsterschicht, versehen ist, die vorzugsweise zwischen der Dekorschicht und dem Trägermaterial angeordnet wird. Das Trägermaterial kann mehrschichtig aufgebaut sein.

Erfindungsgemäß weist dieses Ausstattungsteil eine Leuchtfläche auf, insbesondere um gewisse Bereiche des Ausstattungsteils hervorzuheben und/oder um die Ausleuchtung des Innenraumes des Fahrzeuges zu ermöglichen oder zu verbessern. Diese Leuchtfläche besteht erfindungsgemäß aus einem Formkörper, der in der Regel als Trägerschicht dient. Dieser Formkörper wird oftmals durch Formen eines flächigen Materials und/oder durch Gießen bzw. Spritzgießen hergestellt. An diesem Formkörper ist ein Lichtleiter angeordnet. Vorzugsweise ist der Lichtleiter mit dem Formkörper stoffschlüssig verbunden, insbesondere mit diesem verklebt. Bei dem Lichtleiter handelt es sich erfindungsgemäß um einen flächigen, flexiblen Lichtleiter, so dass die Leuchtfläche vergleichsweise groß ausfallen kann und nicht eben sein muss, da sich der flexible Lichtleiter an die Kontur der Formplatte anpasst. Durch seine Flexibilität macht der Lichtleiter gewisse mechanische Beanspruchungen mit, ohne beschädigt zu werden. Bei einem Bruch, beispielsweise in einer Unfallsituation, entstehen aufgrund der Flexibilität keine scharfen Kanten. Zwischen dem Lichtleiter und dem Innenraum, d. h. auf der Sichtseite des Ausstattungsteils ist der Lichtleiter erfindungsgemäß vollflächig mit einer Deckschicht versehen, die vorzugsweise über den Rand des Lichtleiters hinaussteht. Bei dieser Deckschicht handelt es sich zumindest um eine Dekorschicht, beispielsweise ein Leder-, Stoff- oder Alcantarabezug, der besonders bevorzugt ein Softtouch aufweist, d. h. bei dem vorzugsweise zwischen der Dekorschicht und dem Leiter noch eine Polsterschicht vorgesehen ist. Das von dem Lichtleiter emitierte Licht durchstrahlt die Deckschicht und lichtet sodann den Innenraum des Fahrzeuges. Die Dekorschicht, die Polsterschicht und der Lichtleiter werden vorzugsweise stoffschlüssig, insbesondere durch Kleben, miteinander verbunden.

Erfindungsgemäß ist nun der Formkörper in seinem Randbereich zumindest abschnittsweise mit einer Einbuchtung versehen, die die Lichtquelle aufnimmt. Diese Einbuchtung hat zum einen den Vorteil, dass sie dem Formkörper Stabilität verleiht, zum anderen aber auch den Übergang zwischen dem Formkörper und daran anschließenden Bauteilen verbessert, so dass dieser Übergang optisch ansprechend aber nicht scharfkantig ist. Dadurch dass, die Lichtquelle in der Einbuchtung vorgesehen wird, ist das erfindungsgemäße Ausstattungsteil sehr platzsparend gestaltet und die Lichtquelle ist geschützt.

Vorzugsweise ist die Einbuchtung als Nut, ganz besonders bevorzugt als durchgehende sich um den gesamten Randbereich des Formkörpers erstreckende Nut, gestaltet. Die Lichtquelle kann die gesamte Länge oder eine Teillänge der Nut aufweisen. Es können mehrere Lichtquellen in der Nut angeordnet werden, die gemeinsam oder getrennt voneinander betreibbar sind. Die einzelnen Lichtquellen können Licht mit unterschiedlichen Wellenlängen und/oder mit unterschiedlicher Intensität ausstrahlen. Bei der Lichtquelle kann es sich beispielsweise um eine LED, OLED und/oder um eine Glühbirne handeln. Jede Lichtquelle kann an einen oder mehrere Stromkreise angeschlossen werden. Mehrere Lichtquellen können an einen gemeinsamen oder getrennte Stromkreise angeschlossen werden.

Vorzugsweise weist die Einbuchtung mindestens eine Ausnehmung zur Einkopplung des Lichtes von der Lichtquelle in den Lichtleiter auf. Beispielsweise handelt es sich bei der Ausnehmung um einen Schlitz.

Vorzugsweise ist die Lichtquelle in einem Gehäuse vorgesehen, das in der Einbuchtung angeordnet und vorzugsweise stoffschlüssig mit dieser verbunden, insbesondere in diese eingeklebt wird.

In einer anderen bevorzugten Ausführungsform wird die Lichtquelle direkt an der Randung der Einbuchtung angeordnet, vorzugsweise formschlüssig, insbesondere durch Kleben mit dieser verbunden.

Vorzugsweise ist die Lichtquelle jedoch so vorgesehen, dass sie einfach austauschbar ist.

### Figuren

Im Folgenden wird die Erfindung anhand der Figuren 1 bis 5 erläutert. Diese Erläuterungen sind lediglich beispielhaft und schränken den allgemeinen Erfindungsgedanken nicht ein.
- **Figur 1**: zeigt eine Ausführungsform des erfindungsgemäßen Ausstattungsteils, hier eine Türverkleidung.
- **Figur 2a**: zeigt Details des Ausstattungsteils.
- **Figur 2b**: zeigt ein Gehäuse für eine Lichtquelle.
- **Figur 3**: zeigt die Einbuchtung des Formkörpers.
- **Figur 4**: zeigt eine weitere Darstellung des Gehäuses.
- **Figur 5**: zeigt das Gehäuse in der Einbuchtung des Ausstattungsteils.

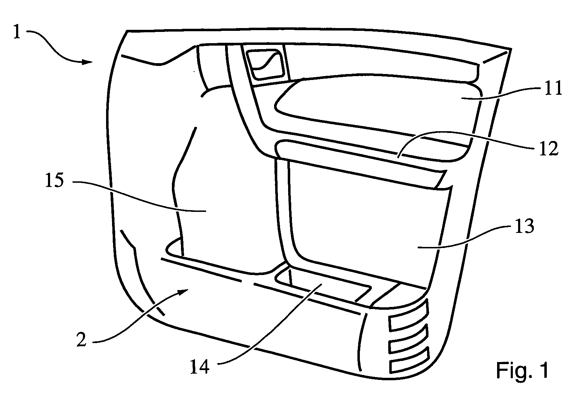

Figur 1 zeigt die Sichtseite 2 einer Ausführungsform des erfindungsgemäßen Ausstattungsteils 1, hier einer Türverkleidung. Diese Türverkleidung weist einen Türgriff 12 sowie ein Staufach 14 auf. Des Weiteren weist die Türverkleidung ein erstes 11, ein zweites 13 sowie ein drittes Oberflächenteil 15 auf, die jeweils eine Leuchtfläche 11, 13, 15 darstellen können.

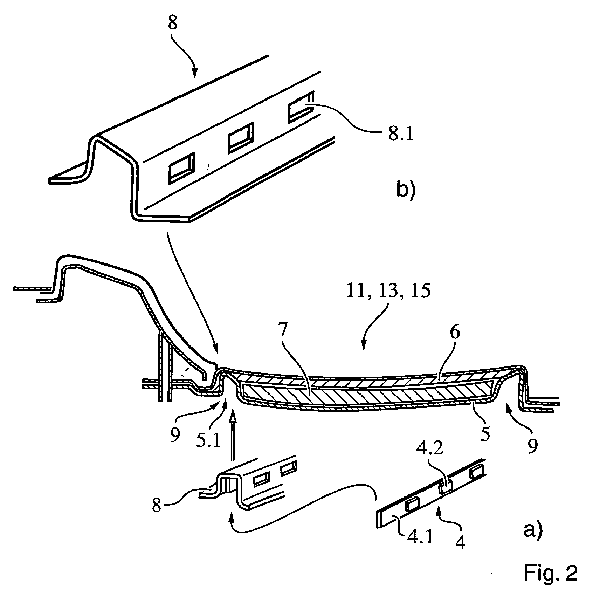

Figur 2a zeigt Details des Ausstattungsteils 1, insbesondere der Leuchtfläche 11, 13, 15. Diese weist rückseitig ein Formteil 5 auf, das in dem vorliegenden Fall wannenartig gestaltet ist und in seinem Randbereich 9 umlaufend eine Einbuchtung 5.1 aufweist. Diese Einbuchtung ist insbesondere in ihrem dem Fahrgastraum zugewandten Randbereich abgerundet gestaltet, damit es keine scharfen Kanten aufweist. An das Formteil 5 schließen sich im Randbereich weitere Formteile an. Innerhalb des Formteils 5 ist ein flächiger flexibler Lichtleiter 7 angeordnet, der in Richtung des Fahrgastinnenraums von einer Deckschicht 6 abgedeckt wird und mit dem Formteil 5 verklebt ist. Wie durch die angedeutete Explosionsdarstellung gezeigt, wird eine Lichtquelle 4, hier LEDs 4.2, die auf einer Leiterplatte 4.1 angeordnet sind, in einem Gehäuse 8 angeordnet, das wiederum in den Spalt 5.1 eingeführt wird. Wie insbesondere Figur 2b entnommen werden kann, weist das Gehäuse 8 im Bereich der LEDs 4.2. Ausnehmungen 8.1 auf, durch die Lichtstrahlen in Richtung des Lichtleiters geleitet werden. Die Größe der Ausnehmung entspricht in dem vorliegenden Fall der Fläche der LEDs oder OLEDs. Der Fachmann versteht, dass der Formkörper 5 zumindest im Bereich der Ausnehmung 8.1 ebenfalls Öffnungen beispielsweise Schlitze aufweist, durch die das Licht von der Lichtquelle 4 in den Lichtleiter 7 eingekoppelt wird.

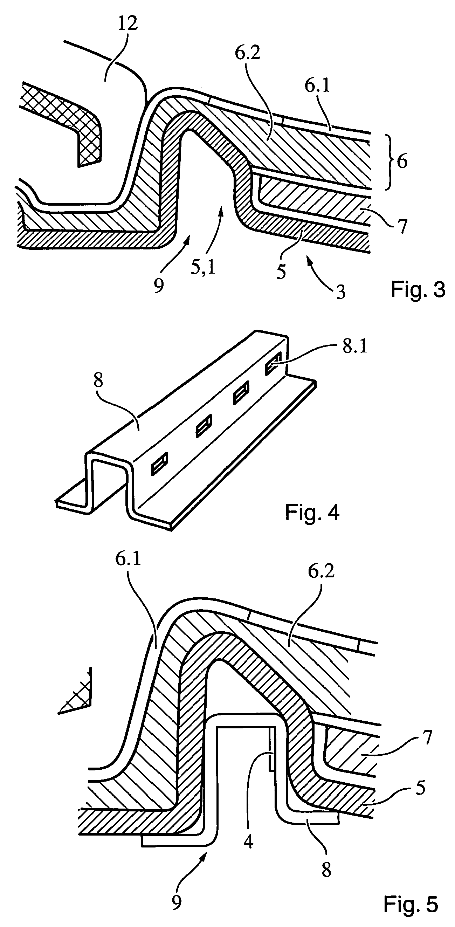

Figur 3 zeigt Details des Randbereichs 9 des Formkörpers 5 des erfindungsgemäßen Ausstattungsteils. Deutlich ist zu erkennen, dass auf seiner Rückseite eine Einbuchtung 5.1 vorgesehen ist, die im Wesentlichen nutförmig ausgebildet ist, wobei der Grund der Nut in dem vorliegenden Fall schräg vorgesehen ist und die Eckbereiche abgerundet sind, um, zum einen einen guten Übergang zu zumindest einem benachbarten Bauteil zu erhalten aber zum anderen keine gefährlichen spitzen Kanten zu erzeugen. Weiterhin ist in dieser Darstellung zu erkennen, dass die Deckschicht 6 sowohl eine Dekorschicht 6.1, beispielsweise aus Leder-, Stoff- oder Alcantara und eine Polsterschicht 6.2 aufweist, die wiederum die Verletzungsgefahr reduziert und dem erfindungsgemäßen Ausstattungsteil auch im Bereich der Leuchtfläche einen sogenannten Softtouch verleiht.

Figur 4 zeigt noch einmal das Gehäuse 8 mit der Ausnehmung 8.1, das wie in Figur 5 dargestellt, in die Ausnehmung 5.1 eingebaut, hier eingeklebt wird.

Weiterhin ist in der Darstellung gemäß Figur 5 die Lichtquelle 4 zu erkennen.

### Bezugszeichenliste

- 1: Ausstattungsteil
- 2: Sichtseite
- 3: Rückseite
- 4: Lichtquelle
- 4.1: Leiterplatte
- 4.2: LED, OLED
- 5: Formköper, Türmittelteil
- 5.1: Einbuchtung, Nut
- 6: Deckschicht
- 6.1: Dekorschicht
- 6.2: Polsterschicht
- 7: Lichtleiter
- 8: Gehäuse
- 8.1: Ausnehmung im Gehäuse
- 9: Rand
- 11: erstes Oberflächenteil, Leuchtfläche
- 12: Türgriff
- 13: zweites Oberflächenteil, Leuchtfläche
- 14: Staufach
- 15: drittes Oberflächenteil, Leuchtfläche

## Patentansprüche

1. Ausstattungsteil (1) für den Innenraum eines Fahrzeuges mit einer Leuchtfläche (11, 13, 15), die aus einem Formkörper (5), an dem ein Lichtleiter (7) angeordnet ist, der mit einer Deckschicht (6) versehen ist, besteht,
wobei der Lichtleiter (7) zwischen dem Formkörper (5) und der Deckschicht (6) vorgesehen ist,
wobei die Deckschicht (6) eine Dekor- (6.1) und eine Polsterschicht (6.2) aufweist,
**dadurch gekennzeichnet, dass** der Formkörper in seinem Randbereich (9) zumindest abschnittsweise eine Einbuchtung (5.1) aufweist, die mindestens eine Lichtquelle (4) aufnimmt, wobei das Licht der Lichtquelle in den Lichtleiter eingekoppelt wird.

2. Ausstattungsteil (1) nach Anspruch 1, wobei die Einbuchtung als Nut ausgeführt ist.

3. Ausstattungsteil (1) nach einem der voranstehenden Ansprüche, wobei die Einbuchtung (5.1) eine Ausnehmung zur Einkopplung des Lichtes von der Lichtquelle (4) in den Lichtleiter aufweist.

4. Ausstattungsteil (1) nach einem der voranstehenden Ansprüche, wobei die Lichtquelle (4) in einem Gehäuse (8) vorgesehen ist, das in der Einbuchtung (5.1) angeordnet ist.

5. Ausstattungsteil (1) nach einem der Ansprüche 1-3, wobei die Lichtquelle direkt an der Einbuchtung angeordnet, vorzugsweise formschlüssig mit dieser verbunden, ist.

6. Ausstattungsteil (1) nach einem der voranstehenden Ansprüche, wobei die Deckschicht über den Rand des Lichtleiters hinaussteht.

## Claims

1. A fitting (1) for a vehicle interior having an illuminated area (11, 13, 15) consisting of a molded body (5) on which a light conductor (7) provided with a cover layer (6) is disposed, wherein the light conductor (7) is provided between the molded body (5) and the cover layer (6), wherein the cover layer (6) comprises a decorative layer (6.1) and a padding layer (6.2),
**characterized in that** the molded body exhibits an at least sectional indentation (5.1) in its edge region (9) which accommodates at least one light source (4), wherein the light of the light source is coupled into the light conductor.

2. The fitting (1) according to claim 1, wherein the indentation is realized as a notch.

3. The fitting (1) according to one of the preceding claims, wherein the indentation (5.1) has a recess for coupling the light from the light source (4) into the light conductor.

4. The fitting (1) according to any one of the preceding claims, wherein the light source (4) is provided in a housing (8) arranged in the indentation (5.1).

5. The fitting (1) according to any one of claims 1-3, wherein the light source is arranged directly at the indentation, preferably positively connected to same.

6. The fitting (1) according to any one of the preceding claims, wherein the cover layer protrudes over the edge of the light conductor.

## Revendications

1. Pièce d'équipement (1) pour l'habitacle intérieur d'un véhicule, avec une surface d'éclairage (11, 13, 15), qui est constituée par un corps conformé (5) sur lequel est agencé un guide de lumière (7) et qui est doté d'une couche de couverture (6),
dans lequel le guide de lumière (7) est prévu entre le corps conformé (5) et la couche de couverture (6),
dans lequel la couche de couverture (6) comprend une couche de décoration (6.1) et une couche de rembourrage (6.2),
**caractérisée en ce que** le corps conformé comporte, dans sa zone de bordure (9) et au moins localement, un creux (5.1) qui reçoit au moins une source de lumière (4), et dans laquelle la lumière de la source de lumière est injectée dans le guide de lumière.

2. Pièce d'équipement (1) selon la revendication 1, dans laquelle le creux est réalisé sous forme de gorge.

3. Pièce d'équipement (1) selon l'une des revendications précédentes, dans laquelle le creux (5.1) comporte un évidement pour l'injection de la lumière de la source de lumière (4) dans le guide de lumière.

4. Pièce d'équipement (1) selon l'une des revendications précédentes, dans laquelle la source de lumière (4) est prévue dans un boîtier (8) qui est agencé dans le creux (5.1).

5. Pièce d'équipement (1) selon l'une des revendications 1 à 3, dans laquelle la source de lumière est agencée directement sur le creux, et de préférence reliée à celui-ci en coopération de formes.

6. Pièce d'équipement (1) selon l'une des revendications précédentes, dans laquelle la couche de couverture dépasse au-delà de la bordure du guide de lumière.
